# EUROPEAN PATENT APPLICATION

(11) **EP 2 403 175 A1**
(43) Date of publication of application: **04.01.2012**
(21) Application number: 10746147.7
(22) Date of filing: 15.02.2010
(51) Int. Cl.: H04L 1/00, H04L 7/08, H04L 12/44

(54) **OPTICAL LINK TERMINAL, OPTICAL NETWORK UNIT, OPTICAL COMMUNICATION SYSTEM, ERROR CORRECTING METHOD, AND RECORDING MEDIUM**

(30) Priority: 27.02.2009 JP 2009046700
(71) Applicant: NEC Corporation, Tokyo 108-8001 (JP)
(72) Inventor: OGUSHI, Sadaichiro, Tokyo 108-8001 (JP)
(74) Representative: Sieckmann, Dirk Christoph
(86) International application number: PCT/JP2010/052568
(87) International publication number: WO 2010/098266

(57) **Abstract**

In conventional technology, if a frame itself is discarded as being invalid when a sync header has an error, an error correction cannot be performed on a frame that does not fall out of synchronization even at such a low error rate that an error correction can satisfactorily be performed. According to the present invention, each of an optical line terminal and an optical network unit includes a synchronization detection part for detecting whether or not received data converted into frame form falls out of synchronization, and an error correction part for performing an error correction on a frame of the received data that has been detected not falling out of synchronization by the synchronization detection means, irrespective of existence of an error in a sync header of that frame.

## Description

### Technical Field:

The present invention relates to an optical line terminal (OLT), an optical network unit (ONU), and an optical communication system such as a PON (Passive Optical Network) system in which the optical line terminal and the optical network unit are connected to each other with an error correction function for communication, an error correction method, and a recording medium.

### Background Art:

The 10GE-PON (10 Gigabit Ethernet (registered trademark) Passive Optical Network) system is a communication scheme defined by the IEEE Std 802.3. Thus, the 10GE-PON system is a communication scheme that is based upon the 10 Gigabit Ethernet and has an error correction function as a prerequisite.

This error correction function continuously monitors the normality of a sync header. If a sync header has an error, the error correction function discards a corresponding frame having the error as being invalid.

JP-A 2008-67252 (hereafter referred to as Patent Document 1) has been known as the related art of the present invention. According to Patent Document 1, when an OLT detects a delimiter for out-of-synchronization from an ONU, it establishes frame synchronization based upon the frame boundary. When the ONU detects a delimiter from the OLT, it establishes frame synchronization based upon the frame boundary. The OLT and the ONU correct an error of data and decode the data with use of FEC (Forward Error Correction) frames in which synchronization has been established.

However, in the aforementioned general 10GE-PON system, if a receiving error is caused by optical attenuation or the like to such a degree that sync headers do not fall out of synchronization, a frame having an invalid sync header may be discarded as a frame error.

In this case, if the frame itself is discarded as being invalid when a sync header has an error, then an error cannot be corrected even at such a low error rate that an error correction can be performed.

Furthermore, the aforementioned technology of Patent Document 1 aims to establish more reliable frame synchronization by detecting a delimiter for out-of-synchronization or a delimiter, and does not consider performing a more reliable error correction on a frame that does not fall out of synchronization.

Moreover, the aforementioned technology of Patent Document 1 needs to define a unique signal, such as a delimiter for out-of-synchronization, in order to establish synchronization.

### Summary of Invention:

The present invention has been made in view of those circumstances. It is, therefore, an object of the present invention to provide an optical line terminal, an optical network unit, an optical communication system, an error correction method, and a recording medium that do not need to define an unique signal and can perform a more reliable error correction on a frame that does not fall out of synchronization, for example, even in a communication state having such an error rate that an error occurs in a sync header.

In order to achieve the object, an optical line terminal according to the present invention is characterized by comprising: a synchronization detection part for detecting whether or not received data converted into frame form falls out of synchronization; and an error correction part for performing an error correction on a frame of the received data that has been detected not falling out of synchronization by the synchronization detection part, irrespective of existence of an error in a sync header of that frame.

Furthermore, an optical network unit according to the present invention is characterized by comprising: a synchronization detection part for detecting whether or not received data converted into frame form falls out of synchronization; and an error correction part for performing an error correction on a frame of the received data that has been detected not falling out of synchronization by the synchronization detection part, irrespective of existence of an error in a sync header of that frame.

Moreover, an optical communication system according to the present invention is characterized by being configured such that a plurality of optical network units according to the present invention are connected to the optical line terminal according to the present invention via an optical transmission line branched by an optical divider.

Furthermore, an error correction method according to the present invention is characterized by comprising: a synchronization detection step of detecting whether or not received data converted into frame form falls out of synchronization; and an error correction step of performing an error correction on a frame of the received data that has been detected not falling out of synchronization by the synchronization detection step, irrespective of existence of an error in a sync header of that frame.

Moreover, a recording medium having a program recorded thereon for executing a procedure with a computer of an optical line terminal according to the present invention is **characterized in that** the procedure comprises a synchronization detection process of detecting whether or not received data converted into frame form falls out of synchronization, and an error correction process of performing an error correction on a frame of the received data that has been detected not falling out of synchronization by the synchronization detection process, irrespective of existence of an error in a sync header of that frame.

Furthermore, a recording medium having a program recorded thereon for executing a procedure with a computer of an optical network unit according to the present invention is **characterized in that** the procedure comprises a synchronization detection process of detecting whether or not received data converted into frame form falls out of synchronization, and an error correction process of performing an error correction on a frame of the received data that has been detected not falling out of synchronization by the synchronization detection process, irrespective of existence of an error in a sync header of that frame.

As described above, according to the present invention, it is not necessary to define an unique signal, and a more reliable error correction can be performed on a frame that does not fall out of synchronization, for example, even in a communication state having such an error rate that an error occurs in a sync header.

### Brief Description of Drawings:

Fig. 1 is a block diagram showing a configurational example of a 10GE-PON system according to an exemplary embodiment of the present invention;
Fig. 2 is a block diagram showing an OLT receiving error correction part of an OLT used in the 10GE-PON system illustrated in Fig. 1;
Fig. 3 is a block diagram showing an ONU receiving error correction part of an ONU used in the 10GE-PON system illustrated in Fig. 1;
Fig. 4 is a diagram showing a frame format of downlink data when an error correction function is available;
Fig. 5 is a diagram showing an example of a data frame format in a burst interval of uplink data;
Fig. 6 is a flow chart showing an operation of the OLT receiving error correction part illustrated in Fig. 2; and
Fig. 7 is a flow chart showing an operation of the ONU receiving error correction part illustrated in Fig. 3.

### Mode(s) for Carrying Out the Invention:

Referring now to the drowsing, the description will proceed to an exemplary embodiment in which an optical line terminal, an optical network unit, an optical communication system, an error correction method, and a recording medium according to the present invention are applied to a 10GE-PON (10 Gigabit Ethernet (registered trademark) Passive Optical Network) system in detail.

First, an outline of this exemplary embodiment will be described.

This exemplary embodiment is **characterized in that** a more reliable error correction can be performed, for example, even at such a high error rate that an error occurs in a sync header on an OLT (Optical Line Terminal) or an ONU (Optical Network Unit), which constitutes a 10GE-PON system.

Therefore, in the present exemplary embodiment, when the OLT detects a head of a delimiter from received signals, it changes into an operation state of synchronization. Furthermore, when the ONU detects a head of a sync header from received signals, it changes into an operation state of synchronization.

When each of the OLT and the ONU changes to an operation state of synchronization, an error correction part performs an error correction process, irrespective of existence of an error in a sync header, until the synchronization is completely lost.

Thus, each of the OLT and the ONU can perform a more reliable error correction on a frame that does not fall out of synchronization. Therefore, it is possible to decrease the number of data frames discarded as being unable to be corrected, and to improve the transmission efficiency in the optical communication.

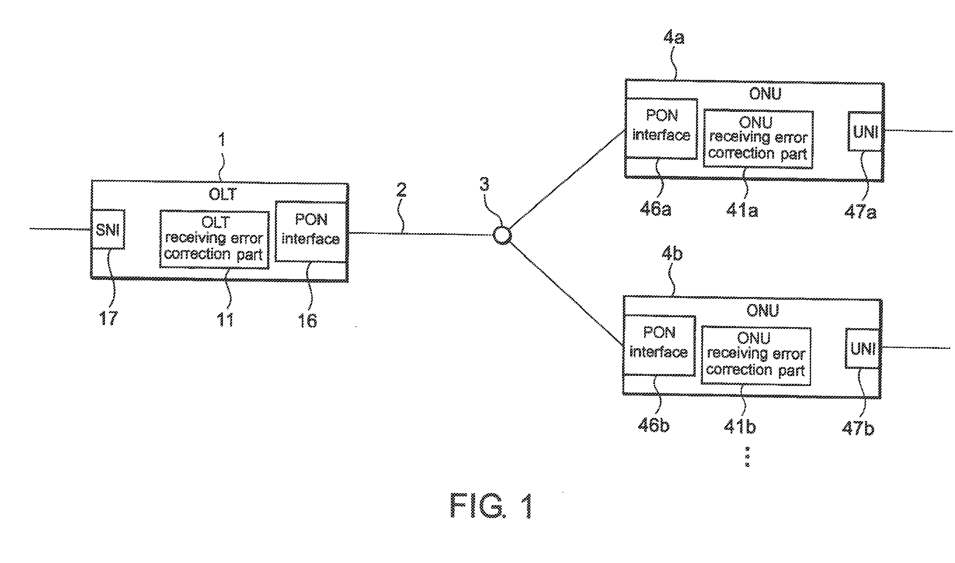

Fig. 1 is a block diagram showing a configurational example of a 10GE-PON system of this exemplary embodiment.

As shown in Fig. 1, the 10GE-PON system according to this exemplary embodiment is configured by connecting a plurality of ONUs 4 (4a, 4b, ...) to an OLT 1 via an optical transmission line (PON line) 2, such as an optical fiber, and an optical coupler (optical divider) 3.

The OLT 1 comprises a PON interface 16 for a subscriber network to perform optical communication with the ONUs 4, and an SNI (Service Node Interface) 17 for connecting to a provider network, which is not shown in the drawings. The OLT 1 further comprises an OLT receiving error correction part 11. The OLT receiving error correction part 11 performs an error correction of received data.

Each of the ONUs 4 comprises a PON interface 46 for the provider network to perform optical communication with the OLT 1, and a UNI (User Network Interface) 47 for connecting to a subscriber network, which is not shown in the drawings. Each of the ONUs 4 further comprises an ONU receiving error correction part 41. The ONU receiving error correction part 41 performs an error correction of received data.

Supplied from the SNI 17, a primary signal inputted is transmitted to the ONU 4a and the ONU 4b through the OLT 1 with branched by the optical coupler 3 from the PON line 2. In this event, the OLT 1 adds an error correction code to a signal to be transmitted. Therefore, on receiving a signal from the OLT 1, the ONU 4 processes the primary signal having the error correction code.

Similarly, supplied from the UNI 47, a signal is transmitted to the OLT 1 through the ONU 4 from the PON line 2. The ONU 4 adds an error correction code to a signal to be transmitted. Therefore, on receiving a signal from the ONU 4, the OLT 1 processes the primary signal having the error correction code.

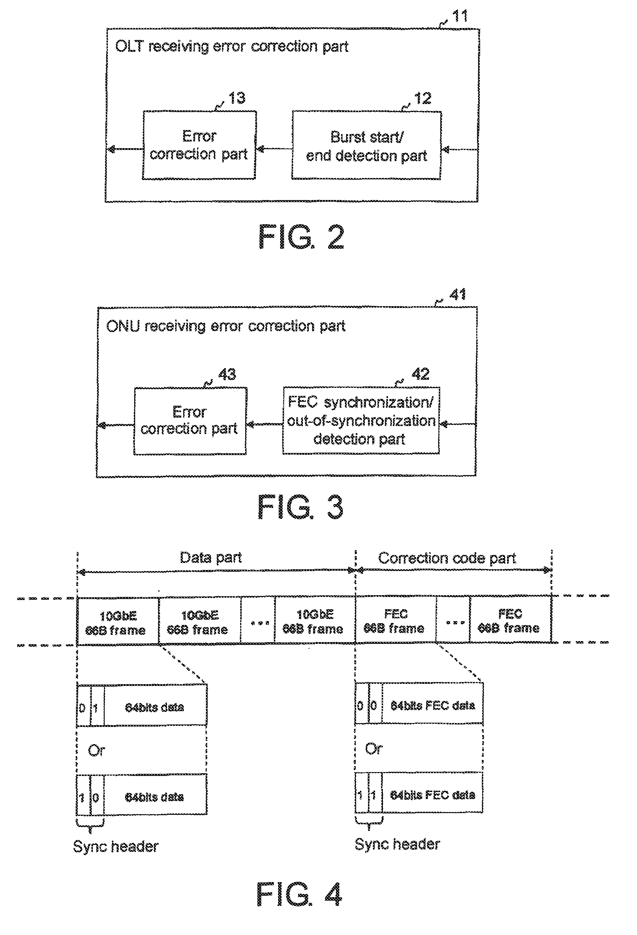

Fig. 2 is a block diagram showing the OLT receiving error correction part 11 in the OLT 1. The OLT receiving error correction part 11 comprises a burst start/end detection part (synchronization detection means) 12 and an error correction part 13.

The burst start/end detection part 12 comprises a module for detecting a burst interval based upon data transmitted from the ONU 4. The error correction part 13 comprises an error correction module with FEC using a Reed-Solomon (RS) code or the like. The burst interval refers to a time interval during which the ONU 4 is communicating.

Fig. 3 is a block diagram showing the ONU receiving error correction part 41 in each of the ONUs 4. The ONU receiving error correction part 41 comprises an FEC synchronization/out-of-synchronization detection part (synchronization detection means) 42 and an error correction part 43.

The FEC synchronization/out-of-synchronization detection part 42 comprises a module for detecting synchronization of FEC frames in the 10GE-PON system. For example, this detection can be implemented with an IEEE 802.3av FEC block synchronizer or the like.

The error correction part 43 comprises an error correction module with FEC using a Reed-Solomon code or the like.

Transmitting components of each of the OLF 1 and the ONUs 4 have been well known to those skilled in the art. The transmitting components do not specifically relate to the core of the present invention, and the explanation thereof is omitted herein.

Fig. 4 is a diagram showing a frame format of downlink data transmitted from the OLT 1 to the ONUs 4 when an error correction function is available.

The example of the frame format of the 10GE-PON system as shown in Fig. 4 comprises a data part and a correction code part. Each of the data part and the correction code part includes a plurality of 66-bit blocks so that they are arranged. The correction code part includes blocks generated from the data part using an encoding algorithm such as Reed-Solomon.

Each of the 66-bit blocks in the frame format comprises the first two bits of a sync header and the remaining 64 bits of data. The data part and the correction code part are distinguished from each other by the sync headers. If the sync header is composed of "01" or "10," the block belongs to the data part. If the sync header is composed of "00" or "11," the block belongs to the correction code part.

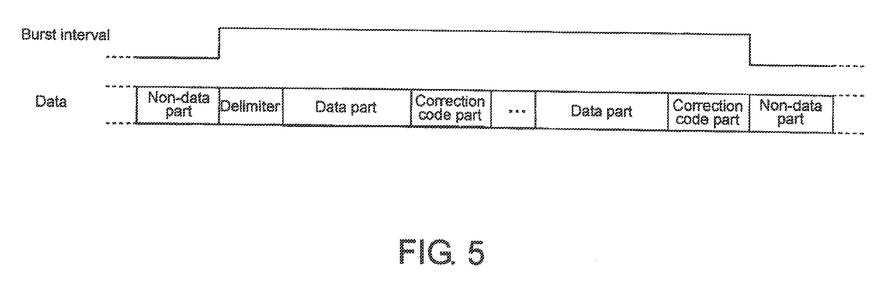

Fig. 5 is a diagram showing an example of a data pattern in a burst interval of uplink data transmitted from the ONU 4 to the OLT 1. In the burst interval, a fixed-length delimiter is provided subsequent to a non-data part at the head of the burst. Right after the delimiter, the 66-bit blocks with the frame format of the 10GE-PON system shown in Fig. 4 continue. When the burst ends, a non-data part appears. The OLT 1 detects the end of the burst when it receives such data that the sync header falls out of synchronization.

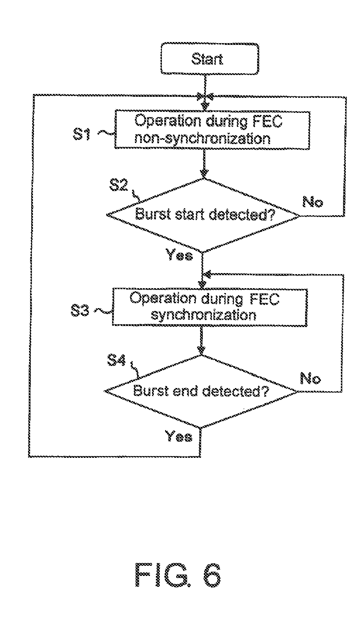

Referring now to a flow chart of Fig. 6, the description will proceed to operation on receiving data in the OLT 1. Fig. 6 is a flow chart showing an operation of the OLT receiving error correction part 11 in the OLT 1.

Prior to a data reception and an error correction by communication with each of the ONUS 4, the OLT 1 needs to establish synchronization for receiving data from the ONU 4.

First, the OLT 1 is brought into an operation state of FEC non-synchronization after the start of operation (Step S1). When the burst start/end detection part 12 of the OLT receiving error correction part 11 detects a delimiter (Step S2; Yes), the OLT 1 determines that synchronization has been established with the ONU 4 that transmitted the delimiter and changes into an operation state of FEC synchronization establishment (Step S3).

In the operation state of Step S3 in which synchronization has been established, the error correction part 13 performs an error correction with FEC irrespective of the existence of an error in a sync header. Specifically, as described above in connection with Fig. 5, the received data after the delimiter include 66-bit frames continuing until the out-of-synchronization. Therefore, even if any sync header has an error, the error correction part 13 performs an error correction with FEC in such a manner that signals of 66 bits following the previous frame (the received frame) are regarded as the next frame.

Thus, a data format is fixed immediately after the establishment of the FEC synchronization. Therefore, at the time of subsequent reception of data, inasmuch as the OLT receiving error correction part 11 transfers frames from the burst start/end detection part 12 to the error correction part 13 regardless of right and wrong of the synch header, it is possible to perform an error correction irrespective of a bit error of the sync header.

When the burst start/end detection part 12 continuously detects a predetermined number of out-of-synchronizations in sync headers during the establishment of the FEC synchronization (Step S4; Yes), the operation state of synchronization returns to the operation state of FEC non-synchronization shown in Step S1.

The detection of out-of-synchronization in a sync header by the burst start/end detection part 12 can be implemented, for example, with an IEEE 802.3av FEC block synchronizer or the like.

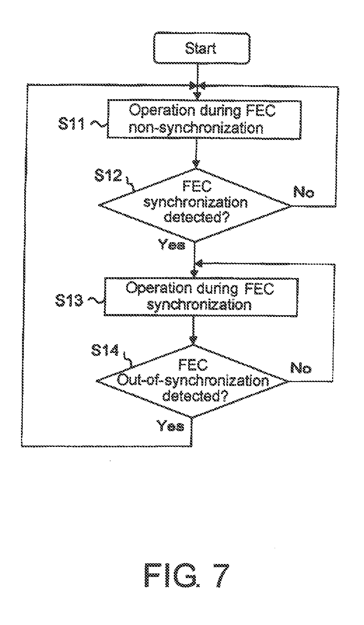

Referring now to a flow chart of Fig. 7, the description will proceed to operation of receiving data in the ONU 4. Fig. 7 is a flow chart showing an operation of the ONU receiving error correction part 41 in the ONU 4.

Prior to reception of data from the OLT 1 and an error correction, the ONU 4 needs to establish synchronization for receiving data.

First, the ONU 4 is brought into an operation state of FEC non-synchronization after the start of operation (Step S11). When the FEC synchronization/out-of-synchronization detection part 42 of the ONU receiving error correction part 41 detects that a predetermined number of sync headers indicative of FEC frames continues and detects that synchronization is achieved (Step S12; Yes), the ONU 4 determines that synchronization has been established and changes into an operation state of FEC synchronization (Step S13).

In the operation state of Step S13 in which synchronization has been established, the error correction part 43 performs an error correction with FEC irrespective of the existence of an error in a sync header. Specifically, as described above in connection with Fig. 4, the received data during the synchronization establishment includes continuous frames of 66 bits. Therefore, even if any sync header has an error, the error correction part 43 performs an error correction with FEC in such a manner that signals of 66 bits following the previous frame (the received frame) are regarded as the next frame.

Thus, during the FEC synchronization, inasmuch as frames are transferred from the FEC synchronization/out-of-synchronization detection part 42 to the error correction part 43 in the ONU receiving error correcting part 41 regardless of right and wrong of the synch header, it is possible to perform an error correction irrespective of a bit error of the sync header.

In the operation state of FEC synchronization, the FEC synchronization/out-of-synchronization detection part 42 monitors out-of-synchronization of sync headers. When FEC synchronization/out-of-synchronization detection part 42 continuously detects a predetermined number of out-of-synchronizations in sync headers (Step S14; Yes), the operation returns to the operation state of FEC non-synchronization shown in Step S11.

The detection of synchronization and out-of-synchronization can be implemented, for example, with an IEEE 802.3av FEC block synchronizer or the like.

Next, the description will proceed to advantageous effects obtained by the aforementioned exemplary embodiment.

A general 10GE-PON system discards a data frame as an invalid frame based upon an error of a sync header. Accordingly, a problem that an error correction fails to function even at such an error rate that an error correction can satisfactorily be performed may arise because a sync header is lost.

In contrast, according to the aforementioned exemplary embodiment, an error correction process using FEC continues unless the entire frames fall out of synchronization, even in a case where a sync header has an error. Therefore, it is possible to avoid an incident that no error correction is performed because of a lost sync header. Accordingly, an error correction can be performed correctly on both of uplink data and downlink data as long as the error rate permits an error correction to be performed satisfactorily.

In other words, if an optical level of transmitted light is lowered by, for example, a long transmission distance of the optical transmission line 2, a large number of the optical couplers 3 for branching the optical transmission line 2, and the like, then an error may occur in a sync header while synchronization has been established in each of the OLT 1 and the ONUs 4.

According to the exemplary embodiment, an error correction using FEC can be performed even in a case where a sync header is detected not falling out of synchronization and has an error at such an error rate that an error correction can satisfactorily be performed. Thus, it is possible to decrease the number of data frame retransmissions caused by data frames discarded as being unable to be corrected. Accordingly, unnecessary retransmission of data frames on which an error correction using FEC can be performed can effectively be prevented for each of the OLT and the ONUs. Thus, the transmission efficiency in the optical communication can be improved.

Furthermore, according to the above exemplary embodiment, the aforementioned error correction can be applied without any change of an established frame format in a general 10GE-PON system. Therefore, according to the present exemplary embodiment, configuration of a receiving circuit in each of the OLT and the ONUs can relatively be simplified.

More specific aspects of the present invention will be described.

In the above optical line terminal, the received data may include a data part and a correction code part, and each of the data part and the correction code part may be converted into frame form. In this case, the error correction part may regard signals of bits that are equal to bits of one frame following the received frame as a single frame to perform a predetermined error correction with use of the correction code part if a sync header of a frame of the received data has an error. Furthermore, the synchronization detection part may detect out-of-synchronization if a predetermined number of sync headers of the received data continuously fall out of synchronization, and detect synchronization establishment with an optical network unit that has transmitted a delimiter if the delimiter is detected in the received data.

In the above optical network unit, the received data may include a data part and a correction code part, and each of the data part and the correction code part may be converted into frame form. In this case, the error correction part may regard signals of bits that are equal to bits of one frame following the received frame as a single frame to perform a predetermined error correction with use of the correction code part if a sync header of a frame of the received data has an error. Furthermore, the synchronization detection part may detect out-of-synchronization if a predetermined number of sync headers of the received data continuously fall out of synchronization, and detect synchronization establishment if a predetermined number of sync headers of the received data are continuously synchronous.

In the above error correction method, the received data may include a data part and a correction code part, and each of the data part and the correction code part may be converted into frame form. In this case, the error correction step may include regarding signals of bits that are equal to bits of one frame following the received frame as a single frame to perform a predetermined error correction with use of the correction code part if a sync header of a frame of the received data has an error. Furthermore, the synchronization detection step may include detecting out-of-synchronization if a predetermined number of sync headers of the received data continuously fall out of synchronization, and detecting synchronization establishment with an optical network unit that has transmitted a delimiter if an optical line terminal detects the delimiter in the received data. Alternatively, the synchronization detection step may include detecting out-of-synchronization if a predetermined number of sync headers of the received data continuously fall out of synchronization, and optical network unit's detecting synchronization establishment if a predetermined number of sync headers of the received data are continuously synchronous.

In the above recording medium for an optical line terminal, the received data may include a data part and a correction code part, and each of the data part and the correction code part may be converted into frame form. In this case, the error correction process may includes regarding signals of bits that are equal to bits of one frame following the received frame as a single frame to perform a predetermined error correction with use of the correction code part if a sync header of a frame of the received data has an error. Furthermore, the synchronization detection process may include detecting out-of-synchronization if a predetermined number of sync headers of the received data continuously fall out of synchronization, and detecting synchronization establishment with an optical network unit that has transmitted a delimiter if the delimiter is detected in the received data.

In the above recording medium for an optical network unit, the received data may include a data part and a correction code part, and each of the data part and the correction code part may be converted into frame form. In this case, the error correction process may include regarding signals of bits that are equal to bits of one frame following the received frame as a single frame to perform a predetermined error correction with use of the correction code part if a sync header of a frame of the received data has an error. Furthermore, the synchronization detection process may includes detecting out-of-synchronization if a predetermined number of sync headers of the received data continuously fall out of synchronization, and detecting synchronization establishment if a predetermined number of sync headers of the received data are continuously synchronous.

While the present invention has been particularly shown and described with reference to exemplary embodiments thereof, the present invention is not limited to these embodiments. It will be understood by those skilled in the art that various changes in form and details may be made therein without departing from the spirit and scope of the present invention as defined by the claims.

For example, the aforementioned procedures for implementing the OLT and the ONU in the above exemplary embodiments may be recorded as a program in a recording medium. Thus, the aforementioned functions in the exemplary embodiments of the present invention can be implemented when the program provided by the recording medium commands a CPU of a computer in a system to conduct processing.

In this case, the present invention is applicable to cases where a group of information including the program is supplied to an output device by the aforementioned recording medium or from an external recording medium via a network.

Specifically, program codes read from the recording medium can implement novel functions of the present invention by themselves. Thus, the recording medium storing the program codes and signals read from the recording medium constitute the present invention.

For example, the recording medium may employ a flexible disk, a hard disk, an optical disk, a magneto-optical disk, a CD-ROM, a CD-R, a CD-RW, a DVD-ROM, a DVD-RAM, a DVD-RW, a DVD+RW, a magnetic tape, a nonvolatile memory card, a ROM, and the like.

The aforementioned functions of the embodiments can be implemented on an OLT or an ONU controlled by the program according to the present invention.

This application is based upon and claims the benefit of priority from Japanese patent application No. 2009-046700, filed on February 27, 2009, the disclosure of which is incorporated herein in its entirety by reference.

## Claims

1. An optical line terminal **characterized by** comprising:
a synchronization detection part for detecting whether or not received data converted into frame form falls out of synchronization; and
an error correction part for performing an error correction on a frame of the received data that has been detected not falling out of synchronization by the synchronization detection part, irrespective of existence of an error in a sync header of that frame.

2. The optical line terminal as recited in claim 1, **characterized in that**:
the received data includes a data part and a correction code part,
each of the data part and the correction code part is converted into frame form, and
the error correction part regards signals of bits that are equal to bits of one frame following the received frame as a single frame to perform a predetermined error correction with use of the correction code part if a sync header of a frame of the received data has an error.

3. The optical line terminal as recited in claim 1 or 2, **characterized in that**:
the synchronization detection part
detects out-of-synchronization if a predetermined number of sync headers of the received data continuously fall out of synchronization, and
detects synchronization establishment with an optical network unit that has transmitted a delimiter if the delimiter is detected in the received data.

4. An optical network unit **characterized by** comprising:
a synchronization detection part for detecting whether or not received data converted into frame form falls out of synchronization; and
an error correction part for performing an error correction on a frame of the received data that has been detected not falling out of synchronization by the synchronization detection part, irrespective of existence of an error in a sync header of that frame.

5. The optical network unit as recited in claim 4, **characterized in that**:
the received data includes a data part and a correction code part,
each of the data part and the correction code part is converted into frame form, and the error correction part regards signals of bits that are equal to bits of one frame following the received frame as a single frame to perform a predetermined error correction with use of the correction code part if a sync header of a frame of the received data has an error.

6. The optical network unit as recited in claim 4 or 5, **characterized in that**:
the synchronization detection part
detects out-of-synchronization if a predetermined number of sync headers of the received data continuously fall out of synchronization, and
detects synchronization establishment if a predetermined number of sync headers of the received data are continuously synchronous.

7. An optical communication system **characterized by** being configured such that
a plurality of optical network units as recited in any one of claims 4 to 6 are connected to the optical line terminal as recited in claim 1 to 3 via an optical transmission line branched by an optical divider.

8. An error correction method **characterized by** comprising:
a synchronization detection step of detecting whether or not received data converted into frame form falls out of synchronization; and
an error correction step of performing an error correction on a frame of the received data that has been detected not falling out of synchronization by the synchronization detection step, irrespective of existence of an error in a sync header of that frame.

9. The error correction method as recited in claim 8, **characterized in that**:
the received data includes a data part and a correction code part,
each of the data part and the correction code part is converted into frame form, and
the error correction step includes regarding signals of bits that are equal to bits of one frame following the received frame as a single frame to perform a predetermined error correction with use of the correction code part if a sync header of a frame of the received data has an error.

10. The error correction method as recited in claim 8 or 9, **characterized in that**:
the synchronization detection step includes:
detecting out-of-synchronization if a predetermined number of sync headers of the received data continuously fall out of synchronization, and
detecting synchronization establishment with an optical network unit that has transmitted a delimiter if an optical line terminal detects the delimiter in the received data.

11. The error correction method as recited in claim 8 or 9, **characterized in that**:
the synchronization detection step includes
detecting out-of-synchronization if a predetermined number of sync headers of the received data continuously fall out of synchronization, and
optical network unit's detecting synchronization establishment if a predetermined number of sync headers of the received data are continuously synchronous.

12. A recording medium having a program recorded thereon for executing a procedure with a computer of an optical line terminal, the procedure comprising:
a synchronization detection process of detecting whether or not received data converted into frame form falls out of synchronization; and
an error correction process of performing an error correction on a frame of the received data that has been detected not falling out of synchronization by the synchronization detection process, irrespective of existence of an error in a sync header of that frame.

13. The recording medium as recited in claim 12, **characterized in that**:
the received data includes a data part and a correction code part,
each of the data part and the correction code part is converted into frame form, and
the error correction process includes regarding signals of bits that are equal to bits of one frame following the received frame as a single frame to perform a predetermined error correction with use of the correction code part if a sync header of a frame of the received data has an error.

14. The recording medium as recited in claim 12 or 13, **characterized in that**:
the synchronization detection process includes:
detecting out-of-synchronization if a predetermined number of sync headers of the received data continuously fall out of synchronization, and
detecting synchronization establishment with an optical network unit that has transmitted a delimiter if the delimiter is detected in the received data.

15. A recording medium having a program recorded thereon for executing a procedure with a computer of an optical network unit, the procedure comprising:
a synchronization detection process of detecting whether or not received data converted into frame form falls out of synchronization; and
an error correction process of performing an error correction on a frame of the received data that has been detected not falling out of synchronization by the synchronization detection process, irrespective of existence of an error in a sync header of that frame.

16. The recording medium as recited in claim 15, **characterized in that**:
the received data includes a data part and a correction code part,
each of the data part and the correction code part is converted into frame form, and
the error correction process includes regarding signals of bits that are equal to bits of one frame following the received frame as a single frame to perform a predetermined error correction with use of the correction code part if a sync header of a frame of the received data has an error.

17. The recording medium as recited in claim 15 or 16, **characterized in that**:
the synchronization detection process includes:
detecting out-of-synchronization if a predetermined number of sync headers of the received data continuously fall out of synchronization, and
detecting synchronization establishment if a predetermined number of sync headers of the received data are continuously synchronous.
